(19) Europäisches Patentamt
European Patent Office
Office européen des brevets

(11) EP 0 925 824 B1

(12) **FASCICULE DE BREVET EUROPEEN**

(45) Date de publication et mention de la délivrance du brevet:
**17.12.2003 Bulletin 2003/51**

(51) Int Cl.[7]: **B01D 61/16**, B01D 61/04, G21F 9/04

(21) Numéro de dépôt: **98403238.3**

(22) Date de dépôt: **21.12.1998**

(54) **Procédé de séparation de métaux par ultrafiltration micellaire, utilisable pour le traitement d'effluents radioactifs**

Verfahren zur Abtrennung von Metallen durch micellare Ultrafiltration, geeignet zur Behandlung von radioaktiven Abfallstoffen

Process for separating metals by micellar ultrafiltration, usable for treating radioactive effluents

(84) Etats contractants désignés:
**BE DE GB**

(30) Priorité: **23.12.1997 FR 9716358**

(43) Date de publication de la demande:
**30.06.1999 Bulletin 1999/26**

(73) Titulaire: **COMPAGNIE GENERALE DES MATIERES NUCLEAIRES**
**78140 Velizy Villacoublay (FR)**

(72) Inventeurs:
- **Tounissou, Philippe**
**54100 Nancy (FR)**
- **Hebrant, Marc**
**54600 Villiers-les-Nancy (FR)**
- **Rodehüser, Ludwig**
**54710 Ludres (FR)**
- **Tondre, Christian**
**54500 Vandoeuvre-les-Nancy (FR)**

(74) Mandataire: **Audier, Philippe André et al**
**Brevalex,**
**3, rue du Docteur Lancereaux**
**75008 Paris (FR)**

(56) Documents cités:
**FR-A- 2 274 998** **FR-A- 2 619 727**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

EP 0 925 824 B1

## Description

### Domaine technique

La présente invention a pour objet un procédé pour séparer des métaux présents dans une solution aqueuse, utilisable en particulier pour le traitement d'effluents radioactifs.
Elle s'applique à la séparation des métaux choisis parmi le thorium, l'uranium, le ruthénium et les transuraniens, notamment à partir de solutions aqueuses ayant une concentration importante en sels tels que les nitrates.
De façon plus précise, elle concerne la séparation par ultrafiltration micellaire, c'est-à-dire après addition à la solution aqueuse de composés organiques capables de complexer les métaux et de former des micelles de taille suffisamment importante pour être retenues par une membrane d'ultrafiltration.

### Etat de la technique antérieure

On connaît deux procédés de séparation d'ions métalliques par ultrafiltration micellaire.
Dans le premier procédé, la complexation du métal par la micelle se fait par attraction électrostatique, les espèces métalliques étant adsorbées suivant leur affinité à la surface de la micelle. Dans ce cas, la micelle est formée d'un composé tensioactif anionique si l'ion métallique est un cation ou d'un composé tensioactif cationique si l'ion métallique est sous forme d'anion.
Dans le second procédé, les espèces métalliques sont complexées avec un ligand solubilisé dans le coeur hydrophobe de la micelle formée d'un tensioactif. Dans ce dernier cas, il est nécessaire d'ajouter à la solution un composé tensioactif et un ligand complexant le métal à extraire.
La séparation d'ion uranyle $UO_2^{2+}$ par ultrafiltration micellaire conformément au premier procédé est décrite par exemple par Reiller et al dans Journal of Colloid and Interface Science, 163, 1994, pages 81-86 [1]. Selon ce procédé, on forme des micelles de dodécyl- ou tétradécylsulfate de sodium dans la solution aqueuse contenant l'uranium et l'on soumet ensuite la solution à une ultrafiltration sur une membrane dont le seuil de coupure est de 10 000 daltons pour retenir l'uranium et obtenir une solution aqueuse purifiée. On peut retenir ainsi plus de 99 % de l'uranium.
Le document FR-A-2 619 727 [2] décrit également la séparation d'ions métalliques par le premier procédé d'ultrafiltration micellaire. Dans ce cas, on ajoute à la solution des détergents tensioactifs tels que le dodécylsulfate de sodium, le bromure de cétyltriméthylammonium et le didodécyldiéthylène triamine triacétate de sodium, ce dernier pouvant également jouer le rôle de complexant, pour separer des ions métalliques tels que Cu(II) et Cr(III) avec des rendements supérieurs à 99 %.
Le second procédé utilisant la présence simultanée de tensioactifs et de ligands est décrit par exemple par Pramauro et al dans Analytica Chimica Acta, 264, 1992, pages 303-310 [3] et dans Colloids and Surfaces, 63, 1992, pages 291-300 [4].
Dans la référence [3] on utilise le second procédé pour séparer des ions uranyle en ajoutant à la solution aqueuse des agents tensioactifs et un ligand formé de deux extrémités phénylalanine reliées par une chaîne éther. On obtient une efficacité améliorée en ajoutant de plus un second ligand hydrophobe constitué par l'oxyde de tripotylphosphine.
Dans la référence [4], on sépare le fer de solutions aqueuses en utilisant des ligands amphiphiles dérivés de l'acide 4-aminosalicylique et des tensioactifs non ioniques du type éther dodécylique de polyoxyéthylène.
On peut obtenir ainsi une efficacité de séparation supérieure à 99 %, mais il convient d'opérer à un pH de 3,5-4,0.
Les procédés décrits ci-dessus permettent de réaliser une séparation satisfaisante de divers métaux à partir de solutions peu chargées en sels, mais certains tensioactifs et ligands utilisés dans ces procédés ne conviennent pas pour l'extraction de métaux à partir de solutions ayant une concentration élevée en nitrates telles que celles issues des usines de retraitement de combustibles nucléaires usés, qui peuvent contenir par exemple 3 mol/l de nitrates, en raison de leur faible solubilité dans ces solutions.

### Exposé de l'invention

La présente invention a précisément pour objet un procédé de séparation d'au moins un métal présent dans une solution aqueuse, qui permet d'obtenir des taux de séparation élevés en partant de solutions fortement chargées en nitrates.
Selon l'invention, le procédé comprend les étapes suivantes :

1) ajouter à la solution aqueuse un tensioactif anionique complexant de formule :

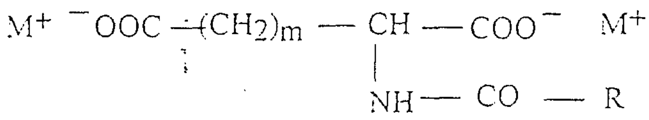 (I)

dans laquelle $M^+$ représente un cation monovalent, m est égal à un ou deux, et R représente un groupe aliphatique, linéaire ou ramifié, saturé ou insaturé, d'au moins huit atomes de carbone, en quantité suffisante pour former des micelles dans la solution, et

2) filtrer ensuite la solution aqueuse à travers une membrane d'ultrafiltration capable de retenir les micelles formées précédemment.

De préférence, pour mettre en oeuvre le procédé de l'invention, on ajoute de plus à la solution aqueuse un tensioactif non ionique pour solubiliser le tensioactif anionique de formule (I) et obtenir un système stable.

En effet, en présence d'une concentration élevée en nitrates, par exemple de 0,1 à 3 mol/l de nitrates, il est difficile d'obtenir un système stable avec le tensioactif de formule (I).

Les tensioactifs non-ioniques susceptibles d'être ajoutés peuvent être de différents types. On peut utiliser, par exemple, des dérivés de polyoxyethylène glycol tels que les produits commercialisés sous les noms Triton X-100 (préparation commerciale polydispersée de p (1,1,3,3-tétraméthylbutyl)phénoxypolyoxyéthylèneglycols contenant une moyenne de 9,5 groupements oxyéthylène par molécule) et Brij 35 qui est un éther laurylique de polyoxyéthylène de formule :

$$CH_3(CH_2)_{11}\text{-}(OCH_2CH_2)_l\text{-}OH \qquad \text{(II)}$$

avec l = 23 en moyenne.

Le Triton X-100 répond à la formule :

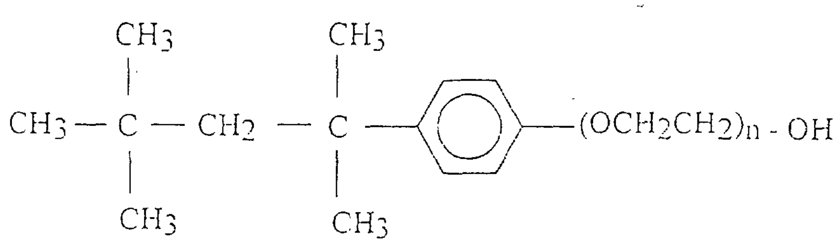 (III)

avec n = 9,5 en moyenne.

Selon l'invention, le tensioactif anionique complexant de formule (I) est un dérivé de diacide aminé qui présente deux fonctions carboxyliques capables de complexer les métaux à séparer. De préférence, dans la formule (I) donnée ci-dessus m est égal à 2, le composé est donc un dérivé de l'acide glutamique.

Dans le tensioactif de formule (I), le groupe R a au moins 8 atomes de carbone, et de préférence 10 à 30 atomes de carbone. Le cation monovalent $M^+$ peut être un métal alcalin ou un cation ammonium.

On peut obtenir de bons résultats avec le dérivé dans lequel R représente le groupe $-(CH_2)_{16}-CH_3$ et m = 2, en utilisant ce dérivé sous la forme de son sel de sodium ($M^+ = Na^-$). Ce dérivé présente une masse molaire de 457 grammes et une concentration micellaire critique de $4{,}5.10^{-3}$ mol/l susceptible de diminuer en présence de fortes concentrations de sels.

On précise que la concentration micellaire critique correspond à la concentration à partir de laquelle se forment des agrégats appelés micelles composés de 50 à 150 monomères.

De préférence, selon l'invention, on associe le tensioactif anionique complexant de formule (I) à un tensioactif non ionique constitué par l'éther laurylique de polyoxyéthylèneglycol de formule (II), qui comprend 23 motifs oxyéthylène, et présente une masse molaire de 1 199,57 g et une concentration micellaire critique de $10^{-5}$ mol/l.

Pour mettre en oeuvre le procédé de l'invention, on ajoute tout d'abord à la solution aqueuse à traiter le tensioactif anionique complexant et éventuellement le tensioactif non ionique, puis on procède à une filtration de la

solution sur une membrane d'ultrafiltration choisie de façon à retenir les micelles formées dans la solution aqueuse.

Lorsqu'on utilise un tensioactif non ionique, on ajoute de préférence ce tensioactif non ionique à la solution avant d'ajouter le tensioactif anionique complexant.

Les quantités de tensioactif(s) ajoutées sont telles que l'on forme des micelles dans la solution. Pour le tensioactif anionique complexant de formule (I), on peut utiliser des concentrations allant de $4.10^{-4}$ à $5.10^{-2}$ mol/l, de préférence des concentrations de $10^{-3}$ à $10^{-2}$ mol/l.

Les concentrations en tensioactif non ionique sont choisies pour obtenir un système stable. On peut utiliser par exemple $5.10^{-3}$ à $4.10^{-2}$ mol/l, de préférence de $10^{-2}$ à $2.10^{-2}$ mol/l de tensioactif non ionique.

Pour réaliser ensuite l'ultrafiltration, on peut utiliser une membrane d'ultrafiltration organique ou minérale.

A titre d'exemple de membranes minérales, on peut citer les membranes à support d'alumine comportant une surface filtrante en zircone/oxyde de titane et les membranes à support de carbone comportant une surface filtrante en zircone/oxyde de tisane.

A titre d'exemple de membrane organique, on peut citer les membranes en cellulose régénérée.

L'ultrafiltration peut être une ultrafiltration frontale, c'est-à-dire que l'on fait circuler le liquide perpendiculairement à la membrane d'ultrafiltration, ou une ultrafiltration tangentielle dans laquelle on utilise des membranes tubulaires et on fait circuler la solution parallèlement à la surface de la membrane tubulaire.

L'ultrafiltration tangentielle est préférée car elle présente les avantages suivants.

On peut limiter le colmatage de la membrane et la formation de la couche de polarisation grâce au flux tangentiel, ce qui permet d'améliorer les débits par rapport à l'ultrafiltration frontale.

Lorsqu'on utilise des membranes minérales, on a une bonne résistance thermique (jusqu'à 380°C) et une bonne résistance chimique pour des pH allant de 1 à 14.

On peut mieux maîtriser la sélectivité en agissant sur les conditions opératoires.

La seule énergie nécessaire est celle utilisée pour faire fonctionner la pompe de circulation.

Le seuil de coupure de la membrane d'ultrafiltration utilisée est choisi de façon à favoriser une bonne rétention des micelles et à éviter des pertes trop importantes de tensioactifs dans le filtrat, sans toutefois diminuer de façon trop importante le débit d'ultrafiltration. On peut utiliser, par exemple, des membranes d'ultrafiltration ayant un seuil de coupure de 5 000 à 30 000 daltons.

Pour l'ultrafiltration frontale, on utilise avantageusement une membrane ayant un seuil de coupure d'environ 10 000 daltons.

Pour l'ultrafiltration tangentielle, des membranes ayant un seuil de coupure de 10 000 à 15 000 daltons sont préférées.

Le procédé de l'invention est facile à mettre en oeuvre, dans le cadre d'une application industrielle, surtout pour le traitement d'effluents radioactifs.

Il convient en particulier pour éliminer le thorium, l'uranium, le plutonium, le ruthénium et les transuraniens d'effluents radioactifs contenant environ 3 mol/l de nitrates, tels que ceux provenant, par exemple, du rinçage d'appareils d'usines de retraitement de combustibles nucléaires irradiés.

D'autres métaux tels que les métaux de transition peuvent également être séparés selon ce procédé.

D'autres caractéristiques et avantages de l'invention apparaîtront mieux à la lecture des exemples suivants, donnés bien entendu à titre illustratif et non limitatif, en référence aux dessins annexés.

## Brève description des dessins

La figure 1 représente de façon schématique en coupe verticale une installation d'ultrafiltration frontale micellaire.

La figure 2 est une représentation schématique en coupe verticale d'une installation d'ultrafiltration tangentielle micellaire.

## Exposé détaillé des modes de réalisation

Sur la figure 1, on a représenté de façon schématique en coupe verticale, une installation d'ultrafiltration frontale micellaire. Cette installation comprend une cellule 1 munie d'une membrane d'ultrafiltration 3 et d'un agitateur magnétique 5 disposé au niveau de la membrane. La sortie du liquide filtré peut être effectuée par la conduite 7, celui-ci étant recueilli dans le récipient 8 et une pression d'azote peut être appliquée au-dessus du liquide 9 présent dans la cellule par une conduite 11 d'introduction d'azote. Sur la figure, on voit que le liquide 9 comprend des micelles 10 sur lesquelles sont adsorbés les métaux à séparer, ainsi que du tensioactif libre 12.

Dans les exemples 1 à 9 qui suivent, on a utilisé une installation de ce type pour séparer le thorium, l'uranium et le ruthénium de solutions aqueuses. Dans ces exemples, la cellule a un volume de 200 ml et la membrane 3 est une membrane en cellulose régénérée dont le seuil de coupure est de 10 000 daltons (membrane Millipore) ayant une

surface filtrante de 28,7 $cm^2$. Dans la cellule 1, on applique une pression d'azote de 0,35 Mpa par la conduite 11.

**Exemples 1 à 3**

Dans ces exemples, on a utilisé cette installation pour séparer le thorium, l'uranium et le ruthénium de solutions aqueuses ayant un pH de 10, une concentration en nitrate de sodium de 3 mol/l, et les teneurs en Th, U et Ru données dans le tableau 1, après leur avoir ajouté un tensioactif anionique constitué par le HS-21 et un tensioactif non ionique constitué par le Triton X-100, les teneurs en HS-21 et en Triton X-100 étant données également dans le tableau 1.

Le tensioactif anionique HS-21 répond à la formule suivante :

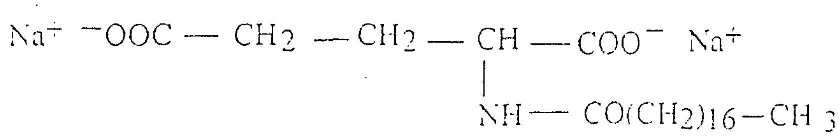

Le Triton X-100 répond à la formule :

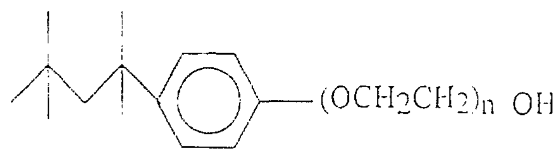

avec n représentant en moyenne 9,5.

Après addition des tensioactifs et agitation jusqu'à l'obtention d'une solution limpide, on ajuste alors le pH à 10 par addition de NaOH.

On effectue ensuite l'ultrafiltration en opérant à une température de 20°C et en filtrant 50 % de la solution. On dose ensuite les métaux dans le rétentat et le filtrat ou perméat par ICP-MS (Torche à Plasma couplée à un spectromètre de masse). A partir de ces dosages, on détermine le rendement d'extraction R qui est calculé de la façon suivante :

$$R (\%) = [1 - (Conc._{perméat}/Conc._{initiale})] \times 100$$

avec Conc. $_{perméat}$ représentant la concentration en métal du perméat et Conc. $_{initiale}$ représentant la concentration de ce métal dans la solution de départ.

Les résultats obtenus sont donnés dans le tableau 1 où l'on a indiqué les concentrations en métal du perméat après filtration de 50 ml et filtration de 50 autres ml.

**Exemple 4**

Dans cet exemple, on suit le même mode opératoire que dans les exemples 1 à 3, pour filtrer une solution aqueuse dont la composition est identique à celle de l'exemple 3. On réalise l'ultrafiltration de façon à filtrer 95 % de la solution aqueuse. Les résultats obtenus sont donnés dans le tableau 2.

**Exemples 5 à 7**

Dans ces exemples, on suit le même mode opératoire que dans les exemples 1 à 3 pour séparer le thorium, l'uranium et le ruthénium de solutions aqueuses ayant les compositions indiquées dans le tableau 3, mais en utilisant comme tensioactif non ionique, le Brij 35 qui est un éther laurylique de polyoxyéthylène de formule :

$$CH_3(CH_2)_{11} - (OCH_2CH_2)_{l-} OH$$

avec l = 23 en moyenne, au lieu du Triton X-100.

Les résultats obtenus sont donnés dans le tableau 3.

**Exemples 8 et 9**

Dans ces exemples, on suit le même mode opératoire que dans l'exemple 4, pour filtrer des solutions aqueuses ayant les compositions indiquées dans les tableaux 4 et 5 en utilisant comme dans les exemples 5 à 7, le Brij 35 au lieu du Triton X-100. Les résultats sont donnés dans les tableaux 4 et 5.

Les tableaux 1 à 5 montrent que l'on obtient de bons résultats d'extraction. Cependant, dans le cas du Triton X-100, il peut y avoir des problème de solubilité si la concentration en métal est trop importante. Lorsqu'on utilise comme tensioactif non ionique le Brij 35 au lieu du Triton X-100 (tableaux 3 à 5), les solutions sont beaucoup plus stables et l'on obtient d'excellents résultats tant au niveau de la solubilité qu'au niveau du rendement d'extraction des métaux.

De plus, une étude effectuée en fonction du pH de la solution aqueuse a permis de voir que ces rendements sont les mêmes pour des pH compris entre 6 et 10.

Dans le cas du ruthénium, les tableaux 1 à 5 montrent que l'on obtient de bons rendements d'extraction du ruthénium en présence des autres métaux.

Sur la figure 2, on a représenté de façon schématique une installation d'ultrafiltration tangentielle. Dans ce cas, la cellule d'ultrafiltration 21 comprend une membrane tubulaire 23 qui délimite un compartiment de rétentat 25 et un compartiment de filtrat ou perméat 27 évacué par la conduite 28 dans un récipient 29. Le solution comportant les micelles 30 et les tensioactifs libres 32 est introduite dans la cellule d'ultrafiltration 21 à partir d'un réservoir 31 par l'intermédiaire d'une pompe 33 et d'une conduite 35 arrivant à la base de la cellule d'ultrafiltration. Le rétentat sortant de la cellule d'ultrafiltration est évacué par la conduite 37 munie de la vanne 39 vers le réservoir 31.

L'exemple 10 qui suit, illustre l'utilisation d'une installation de ce type présentant les caractéristiques suivantes :

- volume de la solution à traiter : 200 ml
- membrane tubulaire 23 en Carbosep dont le seuil de coupure est de 10 000 daltons présentant une surface filtrante en zircone/oxyde de titane de 40 $cm^2$ sur un support en carbone,
- une membrane tubulaire Filtron dont le seuil de coupure est de 15 000 daltons ayant un support en alumine et une surface filtrante en zircone/oxyde de titane de 75 $cm^2$.
- une pression d'entrée de 0,1 Mpa, et
- un débit de recirculation de 85 l/h (correspondant pour la membrane Carbosep à 2,7 m/s en présence d'une âme).

**Exemple 10**

Dans cet exemple, on utilise l'installation d'ultrafiltration tangentielle de la figure 2 avec une membrane du type Carbosep pour traiter une solution aqueuse ayant la composition suivante :

- Brij 35 : $2.10^{-2}$ M
- HS-21 : $5.10^{-3}$ M
- $NaNO_3$ : 3 M
- Th : $2.10^{-3}$ M
- U : $2.10^{-3}$ M
- Ru : $2.10^{-3}$ M

Comme précédemment, on a dosé le thorium, l'uranium et le ruthénium dans le filtrat.

Les résultats obtenus sont donnés dans le tableau 6 qui suit.

En opérant de la même façon avec l'installation comportant la membrane Filtron de 15 000 daltons au lieu de la membrane Carbosep de 10 000 daltons, on obtient les mêmes résultats.

**Références citées**

[1] : Journal of Colloid and Interface Science, 163, 1994, pages 81-86.

[2] : FR-A-2 619 727

[3] : Analytica Chimica Acta, 264, 1992, pages 303-310.

[4] : Colloids and Surfaces, 63, 1992, pages 291-300.

Tableau 1

| Ex | Composition de la solution | Métaux | Conc. 1é 50 ml perméat (mmole/l) | Conc. 2è 50 ml perméat (mmole/l) | Conc. Rétentat (mmole/l) | Bilan nb de moles | Rend. (%) (±0.2) |
|---|---|---|---|---|---|---|---|
| 1 | Triton $2.10^{-2}$ M HS-21 $10^{-2}$ M $NaNO_3$ 3M Th $2.10^{-3}$ M | Th | $2,32.10^{-3}$ | $1,74.10^{-3}$ | 4,2 | $4,2.10^{-4}$ | 99,9 |
| 2 | Triton $10^{-2}$ M HS-21 $10^{-2}$ M $NaNO_3$ 3M U $6.10^{-4}$ M | U | $4,38.10^{-3}$ | $2,9.10^{-2}$ | 1,17 | $1,19.10^{-4}$ | 97,2 |
| 3 | Triton $2.10^{-2}$ M HS-21 $2.10^{-2}$ M $NaNO_3$ 3M Th $4.10^{-4}$ M U $4.10^{-4}$ M Ru $4.10^{-4}$ M | Th | $2,48.10^{-3}$ | | $7,9.10^{-1}$ | $7,92.10^{-5}$ | 99,4 |
| | | U | $3,2.10^{-3}$ | | $8,3.\ 10^{-1}$ | $8,33.10^{-5}$ | 99,2 |
| | | Ru | $4,05.10^{-3}$ | | $8,1.10^{-1}$ | $8,14.10^{-5}$ | 99,0 |

Tableau 2

| Ex | Composition de la solution | Métaux | Concentration dans le filtrat (mmole/l) | Rendement d'extraction (%) (±0.2) |
|---|---|---|---|---|
| 4 | Triton $2.10^{-2}$ M HS-21 $2.10^{-2}$ M $NaNO_3$ 3M Th $4.10^{-4}$ M U $4.10^{-4}$ M Ru $4.10^{-4}$ M | Th | $1,95.10^{-3}$ | 99,5 |
| | | U | $2,05.10^{-3}$ | 99,5 |
| | | Ru | $2,45.10^{-3}$ | 99,4 |

Tableau 3

| Ex | Composition de la solution | Métaux | Conc. 1é 50 ml perméat (mmole/l) | Conc. 2è 50 ml perméat (mmole/l) | Conc. Rétentat (mmole/l) | Bilan nb de moles | Rend. (%) (± 0,2) |
|---|---|---|---|---|---|---|---|
| 5 | Brij 35 $2.10^{-2}$M HS-21 $5.10^{-3}$ M $NaNO_3$ 3M Th $2.10^{-3}$ M | Th | $2,15.10^{-3}$ | | 4,2 | $4,19.10^{-4}$ | 99,9 |
| 6 | Brij 35 $2.10^{-2}$M HS-21 $5.10^{-3}$ M $NaNO_3$ 3M U $2.10^{-3}$ M | U | $8,72.10^{-3}$ | $6,9.10^{-3}$ | 3,95 | $3,95.10^{-4}$ | 99,6 |

Tableau 3 (suite)

| Ex | Composition de la solution | Métaux | Conc. 1é 50 ml perméat (mmole/l) | Conc. 2è 50 ml perméat (mmole/l) | Conc. Rétentat (mmole/l) | Bilan nb de moles | Rend. (%) (± 0,2) |
|---|---|---|---|---|---|---|---|
| 7 | Brij 35 $2.10^{-2}$M HS-21 $5.10^{-3}$M $NaNO_3$ 3M Th $2.10^{-3}$ M U $2.10^{-3}$M Ru $2.10^{-3}$M | Th | $2,9.10^{-3}$ | $2,05.10^{-3}$ | 4,21 | $4,2.10^{-4}$ | 99,9 |
| | | U | $1,08.10^{-2}$ | $5,2.10^{-3}$ | 4,1 | $4,09.10^{-4}$ | 99,7 |
| | | Ru | $4,4.10^{-3}$ | $3,9.10^{-3}$ | 3,89 | $3,9.10^{-4}$ | 99,8 |

Tableau 4

| Ex | Composition de la solution | Métaux | Concentration dans le filtratl mmole/l | Rendement d'extraction (%) (±0.2) |
|---|---|---|---|---|
| 8 | Brij 35 $2.10^{-2}$ M HS-21 $5.10^{-3}$ M $NaNO_3$ 3M Th $2.10^{-3}$ M U $2.10^{-3}$ M Ru $2.10^{-3}$ M | Th | $2.22.10^{-3}$ | 99,9 |
| | | U | $2.32.10^{-2}$ | 98,8 |
| | | Ru | $5,92.10^{-3}$ | 99,8 |
| 9 | Brij 35 $2.10^{-2}$ M HS-21 $10^{-2}$ M $NaNO_3$ 3M Th $2.10^{-3}$ M U $2.10^{-3}$ M Ru $2.10^{-3}$ M | Th | $7,5.10^{-4}$ | 99,95 |
| | | U | $1,57.10^{-2}$ | 99,2 |
| | | Ru | $1,17.10^{-2}$ | 99,4 |

Tableau 5

| Ex | Composition de la solution | Métaux | Conc. 1é 50 ml perméat (mmole/l) | Conc. 2e 50 ml perméat (mmole/l) | Conc. Rétentat (mmole/l) | Bilan nb de moles | Rend. (%) (=0,2) |
|---|---|---|---|---|---|---|---|
| 9 | Brij 35 $2.10^{-2}$ M HS-21 $10^{-2}$ M $NaNO_3$ 3M Th $2.10^{-3}$ M U. $2.10^{-3}$ M Ru. $2.10^{-3}$ M | Th | $9,7.10^{-4}$ | $8,5.10^{-4}$ | 4,05 | $4,05.10^{-4}$ | 99,95 |
| | | U | $2,6.10^{-2}$ | $8.10^{-3}$ | 3,93 | $3,94.10^{-4}$ | 99,2 |
| | | Ru | $2,7.10^{-2}$ | $1,06.10^{-2}$ | 4,01 | $4,02.10^{-4}$ | 99,1 |

Tableau 6

| | Membrane 10 000 d et 15 000 d | | | | | |
|---|---|---|---|---|---|---|
| | Concentration dans le filtrat (mmole) | | | Rendement d'extraction (%) (±0,2) | | |
| % de solution filtrée | Th | U | Ru | Th | U | Ru |
| 10 - 95 % (*) | < 0,001 | < 0,01 | < 0,01 | 99,9 | 99,5 | 99,5 |

(*) Pour ces essais, on a réalisé des ultrafiltrations à 10, 20, 30, 40, 50, 60, 70, 80, 90 et 95 %. Chaque fraction de filtrat (20 ml) a été analysée. Quel que soit le perméat, la quantité de métal était suffisamment faible pour être en dessous de la limite de détection des méthodes analytiques.

## Revendications

**1.** Procédé de séparation d'au moins un métal présent dans une solution aqueuse, qui comprend les étapes suivantes :

1) ajouter à la solution aqueuse un tensioactif anionique complexant de formule :

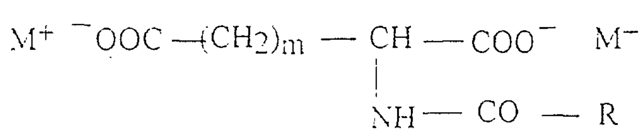

(I)

dans laquelle $M^+$ représente un cation monovalent, m = 1 ou 2, et R représente un groupe aliphatique, linéaire ou ramifié, saturé ou insaturé, d'au moins huit atomes de carbone, en quantité suffisante pour former des nicelles dans la solution, et

2) filtrer ensuite la solution aqueuse à travers une membrane d'ultrafiltration capable de retenir les micelles formées précédemment.

**2.** Procédé selon la revendication 1 dans lequel, dans l'étape 1), on ajoute de plus à la solution aqueuse un tensioactif

non ionique pour solubiliser le tensioactif anionique de formule (I) et obtenir un système stable.

**3.** Procédé selon la revendication 2, dans lequel le tensioactif non ionique est un dérivé de polyoxyéthylène glycol.

**4.** Procédé selon la revendication 3, dans lequel le tensioactif non ionique est l'éther laurylique de polyoxyéthylène glycol de formule :

$$CH_3(CH_2)_{11}\text{-}(OCH_2CH_2)_l\text{-}OH \quad (II)$$

avec l = 23 en moyenne.

**5.** Procédé selon la revendication 3, dans lequel le tensioactif non ionique est un p-(1,1,3,3-tétraméthylbutyl)phénoxy polyoxyéthylène glycol de formule :

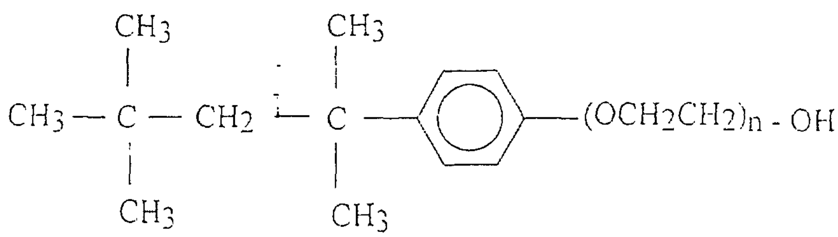 (III)

avec n = 9,5 en moyenne.

**6.** Procédé selon l'une quelconque des revendications 1 à 5, dans lequel le tensioactif anionique répond à la formule (I) dans laquelle R. représente un groupe alkyle de 10 à 30 atomes de carbone.

**7.** Procédé selon l'une quelconque des revendications 1 à 5, dans lequel le tensioactif anionique répond à la formule (I) avec R représentant le groupe $-(CH_2)_{16}-CH_3$, m étant égal à 2 et $M^+$ représentant $Na^+$.

**8.** Procédé selon l'une quelconque des revendications 1 à 7, dans lequel la solution aqueuse comprend de 0 à 3 mol/l d'ions nitrates.

**9.** Procédé selon l'une quelconque des revendications 1 à 8, dans lequel dans l'étape 1) la quantité de tensioactif anionique ajoutée à la solution aqueuse est telle que la concentration en tensioactif anionique de ladite solution soit de $4.10^{-4}$ à $5.10^{-2}$ mol/l, de préférence de $10^{-3}$ à $10^{-2}$ mol/l.

**10.** Procédé selon l'une quelconque des revendications 2 à 5, dans lequel la quantité de tensioactif non ionique ajoutée dans l'étape 1) est telle que la concentration en tensioactif non ionique de ladite solution soit $5.10^{-3}$ à $4.10^{-2}$ mol/l, de préférence de $10^{-2}$ à $2.10^{-2}$ mol/l.

**11.** Procédé selon l'une quelconque des revendications 1 à 10, dans lequel le seuil de coupure de la membrane d'ultrafiltration est de 5 000 à 30 000 daltons.

**12.** Procédé selon la revendication 11, dans lequel, dans l'étape 2), on réalise une ultrafiltration frontale de la solution aqueuse et on utilise une membrane d'ultrafiltration ayant un seuil de coupure d'environ 10 000 daltons.

**13.** Procédé selon la revendication 11, dans lequel, dans l'étape 2), on réalise une ultrafiltration tangentielle de la solution aqueuse et on utilise une membrane d'ultrafiltration ayant un seuil de coupure de 10 000 à 15 000 daltons.

**14.** Procédé selon l'une quelconque des revendications 1 à 13, dans lequel le métal ou les métaux à séparer sont choisis parmi le thorium, l'uranium, le ruthénium et les transuraniens.

**15.** Procédé selon l'une quelconque des revendications 1 à 14, dans lequel la solution aqueuse est un effluent radioactif.

## Claims

**1.** Method for separating at least one metal present in an aqueous solution, which comprises the following stages :

1) adding to the aqueous solution a complexing anionic surfactant having the formula :

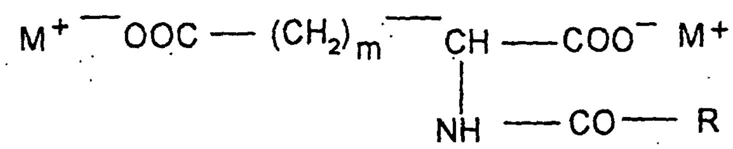

(I)

in which $M^+$ represents a monovalent cation, m = 1 or 2, and R represents a linear or branched, saturated or unsaturated aliphatic group of at least eight carbon atoms in sufficient quantity to form micelles in the solution, and

2) subsequently filtering the aqueous solution through an ultrafiltration membrane able to retain the previously formed micelles.

**2.** Method in accordance with claim 1, in which, in stage 1), to the aqueous solution is also added a nonionic surfactant to solubilize the anionic surfactant of formula (I) and obtain a stable system.

**3.** Method in accordance with claim 2, in which the nonionic surfactant is a derivative of polyoxyethylene glycol.

**4.** Method in accordance with claim 3, in which the nonionic surfactant is the lauryl ether of polyoxyethylene glycol having the formula :

$$CH_3(CH_2)_{11} - (OCH_2CH_2)_1 -OH \quad (II)$$

with 1 = 23 on average.

**5.** Method in accordance with claim 3, in which the nonionic surfactant is a p-(1,1,3,3-tetramethylbutyl)phenoxy polyoxyethylene glycol having the formula:

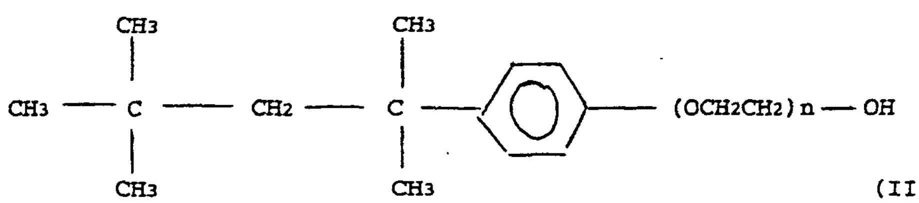

(III)

with n = 9.5 on average.

**6.** Method in accordance with any one of the claims 1 to 5, in which the anionic surfactant meets formula (I) in which R represents an alkyl group of 10 to 30 carbon atoms.

**7.** Method in accordance with any one of the claims 1 to 5, in which the anionic surfactant meets formula (I) in which R represents the $-(CH_2)_{16}-CH_3$ group, m equals 2 and $M^+$ represents $NA^+$.

8. Method in accordance with any one of the claims 1 to 7, in which the aqueous solution comprises from 0 to 3 mol/l of nitrate ions.

9. Method in accordance with any one of the claims 1 to 8, in which in stage 1) the quantity of anionic surfactant added to the aqueous solution is such that the anionic surfactant concentration of said solution is $4.10^{-4}$ to $5.10^{-2}$ mol/l, preferably from $10^{-3}$ to $10^{-2}$ mol/l.

10. Method in accordance with any one of the claims 2 to 5, in which the quantity of nonionic surfactant added in stage 1) is such that the concentration of nonionic surfactant in said solution is $5.10^{-3}$ to $4.10^{-2}$ mol/l, preferably from $10^{-2}$ to $2.10^{-2}$ mol/l.

11. Method in accordance with any one of the claims 1 to 10, in which the cut-off threshold of the ultrafiltration membrane is between 5,000 and 10,000 daltons.

12. Method in accordance with claim 11, in which in stage 2) front flow ultrafiltration of the aqueous solution is carried out, and an ultrafiltration membrane is used having a cut-off threshold of approximately 10,000 daltons.

13. Method in accordance with claim 11, in which in stage 2) tangential flow ultrafiltration of the aqueous solution is carried out, an an ultrafiltration membrane is used having a cut-off threshold of between 10,000 and 15,000 daltons.

14. Method in accordance with any one of the claims 1 to 13, in which the metal or metals to be separated are chosen from among thorium, uranium, ruthenium and transuranics.

15. Method in accordance with any one of the claims 1 to 14, in which the aqueous solution is radioactive waste.

**Patentansprüche**

1. Verfahren zum Trennen wenigstens eines in einer wässrigen Lösung vorhandenen Metalls, das die folgenden Schritte umfasst:

   1) Hinzufügen eines komplexbildenden anionischen Tensids mit der Formel:

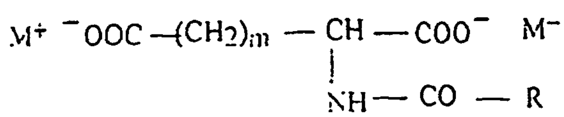

(I)

   zu der wässrigen Lösung, wobei $M^+$ ein monovalentes Kation darstellt, m = 1 oder 2 ist und R eine lineare oder verzweigte, gesättigte oder ungesättigte aliphatische Gruppe mit wenigstens acht Kohlenstoffatomen und mit ausreichender Qualität, um in der Lösung Micellen zu bilden, repräsentiert, und
   2) anschließend Filtern der wässrigen Lösung durch eine Ultrafiltrierungsmembran, die die vorher gebildeten Micellen halten kann..

2. Verfahren nach Anspruch 1, bei dem im Schritt 1) zu der wässrigen Lösung außerdem ein nicht ionisches Tensid hinzugefügt wird, um das anionische Tensid gemäß Formel (I) zu lösen und um ein stabiles System zu erhalten.

3. Verfahren nach Anspruch 2, bei dem das nicht ionische Tensid ein Derivat von Polyoxyethylenglycol ist.

4. Verfahren nach Anspruch 3, bei dem das nicht ionische Tensid Polyoxyehtylenglycol-Laurylether gemäß der Formel

$$CH_3(CH_2)_{11}\text{-}(OCH_2CH_2)_l\text{-}OH \qquad \text{(II)}$$

ist, wobei im Mittel l = 23 ist.

**5.** Verfahren nach Anspruch 3, bei dem das nicht ionische Tensid p-(1,1,3,3-Tetramethylbuthyl) Phenoxy-Polyoxyethylenglycol gemäß der Formel

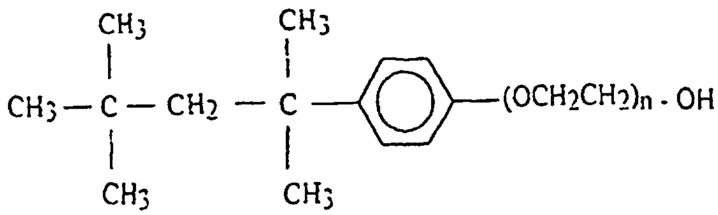

(III)

ist, wobei im Mittel n = 9,5 ist.

**6.** Verfahren nach einem der Ansprüche 1 bis 5, bei dem das anionische Tensid der Formel (I) genügt, in der R eine Alkylgruppe mit 10 bis 30 Kohlenstoffatomen repräsentiert.

**7.** Verfahren nach einem der Ansprüche 1 bis 5, bei dem das anionische Tensid der Formel (I) genügt, wobei R die Gruppe $-(CH_2)_{15}-CH_3$ repräsentiert, wobei m = 2 ist und $M^+$ $Na^+$ repräsentiert.

**8.** Verfahren nach einem der Ansprüche 1 bis 7, bei dem die wässrige Lösung 0 bis 3 Mol/l Nitrationen enthält.

**9.** Verfahren nach einem der Ansprüche 1 bis 8, bei dem im Schritt 1) die Menge des zu der wässrigen Lösung hinzugefügten anionischen Tensids derart ist, dass die Konzentration des anionischen Tensids in der Lösung im Bereich von $4 \cdot 10^{-4}$ bis $5 \cdot 10^{-2}$ Mol/l liegt und vorzugsweise $10^{-3}$ bis $10^{-2}$ Mol/l beträgt.

**10.** Verfahren nach einem der Ansprüche 2 bis 5, bei dem die Menge des nicht ionischen Tensids, das im Schritt 1) hinzugefügt wird, derart ist, dass die Konzentration des nicht ionischen Tensids der Lösung im Bereich von $5 \cdot 10^{-3}$ bis $4 \cdot 10^{-2}$ Mol/l liegt und vorzugsweise $10^{-2}$ bis $2 \cdot 10^{-2}$ Mol/l beträgt.

**11.** Verfahren nach einem der Ansprüche 1 bis 10, bei dem die Kappungsschwelle der Ultrafiltrierungsmembran im Bereich von 5000 bis 30000 Dalton liegt.

**12.** Verfahren nach Anspruch 11, bei dem im Schritt 2) eine frontale Ultrafiltrierung der wässrigen Lösung ausgeführt wird und eine Ultrafiltrierungsmembran verwendet wird, die eine Kappungsschwelle von etwa 10000 Dalton besitzt.

**13.** Verfahren nach Anspruch 11, bei dem im Schritt 2) eine tangentiale Ultrafiltrierung der wässrigen Lösung ausgeführt wird und eine Ultrafiltrierungsmembran verwendet wird, die eine Kappungsschwelle im Bereich von 10000 bis 15000 Dalton besitzt.

**14.** Verfahren nach einem der Ansprüche 1 bis 13, bei dem das Metall oder die Metalle, die getrennt werden sollen, aus Thorium, Uran, Ruthenium und den Transuranen gewählt sind.

**15.** Verfahren nach einem der Ansprüche 1 bis 14, bei dem die wässrige Lösung ein radioaktiver Ausfluss ist.

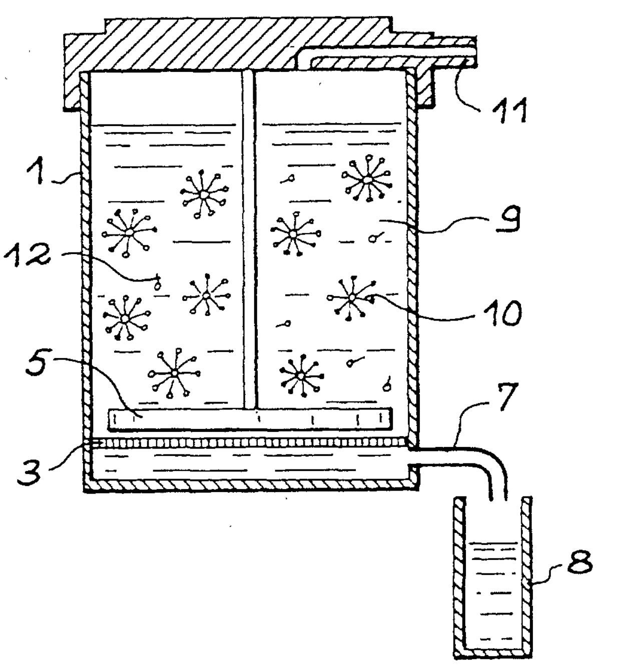


FIG. 1

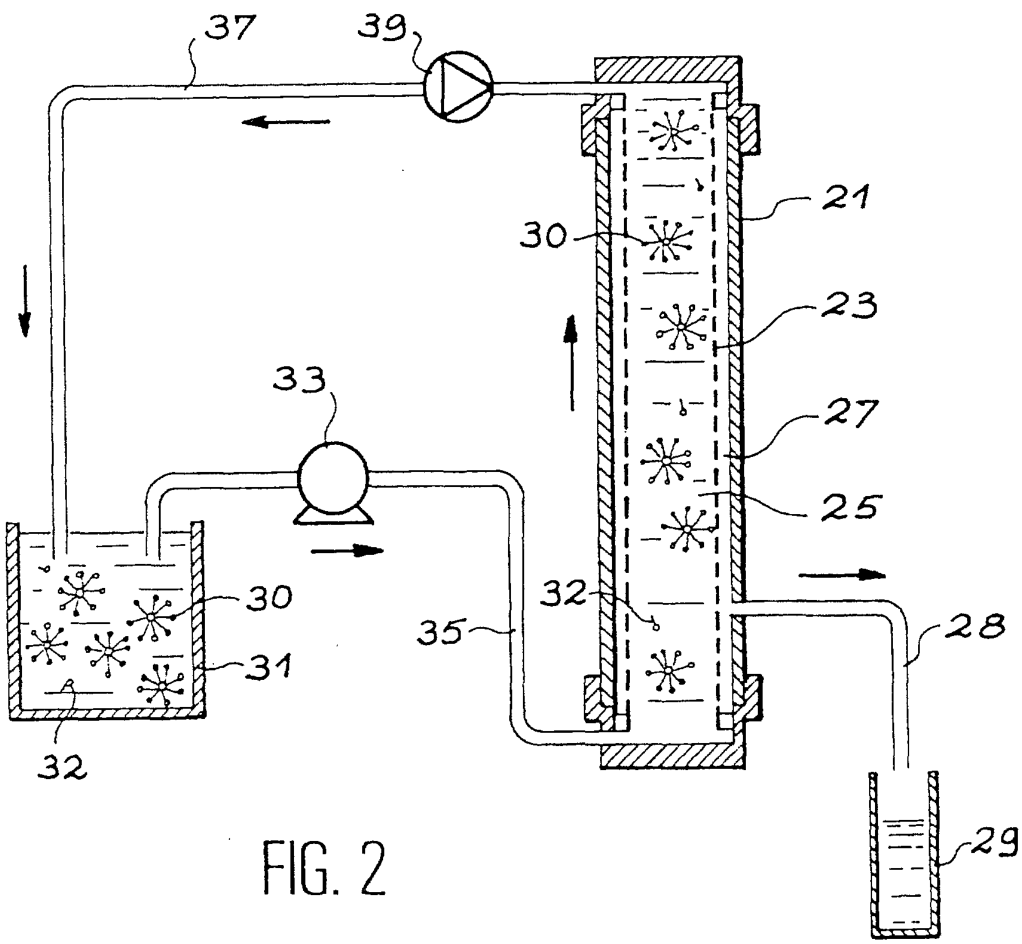


FIG. 2